# EUROPEAN PATENT APPLICATION

(11) **EP 2 991 359 A1**
(43) Date of publication of application: **02.03.2016**
(21) Application number: 15182354.9
(22) Date of filing: 25.08.2015
(51) Int. Cl.: H04N 21/426, H04N 21/436

(54) **METHOD AND APPARATUS FOR DATA PROCESSING**

(30) Priority: 26.08.2014 KR 20140111710
(71) Applicant: Samsung Electronics Co., Ltd., Gyeonggi-do 16677 (KR)
(72) Inventor: Sohn, Jeong-Hyo, Gyeonggi-do (KR)
(74) Representative: Nederlandsch Octrooibureau

(57) **Abstract**

An electronic device is provided comprising: a communication interface; and one or more processors configured to: transmit to a server, via the communication interface, a request for a broadcasting signal, receive a broadcast tuner list from the server, and receive the broadcasting signal from a first broadcast tuner identified in the broadcast tuner list.

## Description

### TECHNICAL FIELD

The present disclosure relates to electronic devices, and more particularly to a method and apparatus for data processing.

### BACKGROUND

According to various embodiments, for reception of a broadcasting signal by an electronic device, the broadcasting signal may be processed such that the broadcasting signal can be used in another electronic device, and then the broadcasting signal may be transmitted to an electronic device corresponding to a client through a server, which can transmit the broadcasting signal, through a unicasting or multicasting scheme.

### SUMMARY

According to aspects of the disclosure, an electronic device is provided comprising: a communication interface; and one or more processors configured to: transmit to a server, via the communication interface, a request for a broadcasting signal, receive a broadcast tuner list from the server, and receive the broadcasting signal from a first broadcast tuner identified in the broadcast tuner list.

According to aspects of the disclosure, a method is provided comprising: transmitting, from an electronic device to a server, a request for a broadcasting signal; receiving a broadcast tuner list from the server; and receiving the broadcasting signal from a first broadcast tuner identified in the broadcast tuner list.

According to aspects of the disclosure, a non-transitory computer-readable medium is provided storing one or more processor-executable instructions, which when executed by one or more processors cause the one or more processors to execute a method comprising the steps of: transmitting to a server a request for a broadcasting signal; receiving a broadcast tuner list from the server; and receiving the broadcasting signal from a first broadcast tuner identified in the broadcast tuner list.

### BRIEF DESCRIPTION OF THE DRAWINGS

The above and other aspects, features, and advantages of the present disclosure will be more apparent from the following detailed description taken in conjunction with the accompanying drawings, in which:
FIG. 1 illustrates a network environment including an electronic device, according to various embodiments of the present disclosure;
FIG. 2 is a block diagram of an electronic device according to various embodiments of the present disclosure;
FIG. 3 is a diagram of an example of a system, according to various embodiments of the present disclosure;
FIG. 4 is a diagram of an example of a broadcast management server table, according to various embodiments of the present disclosure;
FIG. 5 is a diagram of an example of a broadcast tuner list, according to various embodiments of the present disclosure;
FIG. 6 is a block diagram of an example of an architecture for distributing broadcasting signals, according to various embodiments of the present disclosure;
FIG. 7 is a flowchart of an example of a process for distributing broadcasting signals, according to various embodiments of the present disclosure;
FIG. 8 is a flowchart of an example of a sub-process, according to various embodiments of the present disclosure;
FIG. 9 is a block diagram of an example of an architecture for distributing broadcasting signals, according to various embodiments of the present disclosure; and
FIG. 10 is a flowchart of an example of a process for distributing broadcasting signals, according to various embodiments of the present disclosure.

### DETAILED DESCRIPTION

Hereinafter, various embodiments of the present disclosure will be described with reference to the accompanying drawings.

The present disclosure may have various embodiments, and modifications and changes may be made therein. Therefore, the present disclosure will be described in detail with reference to particular embodiments shown in the accompanying drawings. However, it should be understood that there is no intent to limit the present disclosure to the particular forms disclosed herein; rather, the present disclosure should be construed to cover all modifications, equivalents, and/or alternatives falling within the spirit and scope of the disclosure. In the description of the drawings, similar reference numerals may be used to designate similar elements.

As used in various embodiments of the present disclosure, the expressions "include", "may include" and other conjugates refer to the existence of a corresponding disclosed function, operation, or constituent element, and do not limit one or more additional functions, operations, or constituent elements. Further, as used in various embodiments of the present disclosure, the terms "include", "have", and their conjugates are intended merely to denote a certain feature, numeral, step, operation, element, component, or a combination thereof, and should not be construed to initially exclude the existence of or a possibility of addition of one or more other features, numerals, steps, operations, elements, components, or combinations thereof.

Further, as used in various embodiments of the present disclosure, the expression "or" includes any or all combinations of words enumerated together. For example, the expression "A or B" or "at least A or/and B" may include A, may include B, or may include both A and B.

In the present disclosure, expressions including ordinal numbers, such as "first" and "second," etc., may modify various elements. However, such elements are not limited by the above expressions. For example, the above expressions do not limit the sequence and/or importance of the elements. The above expressions are used merely for the purpose of distinguishing an element from the other elements. For example, a first user device and a second user device indicate different user devices although both of them are user devices. For example, without departing from the scope of the present disclosure, a first component element may be named a second component element. Similarly, the second component element also may be named the first component element.

When an element is referred to as being "coupled" or "connected" to any other element, it should be understood that not only the element may be coupled or connected directly to the other element, but also a third element may be interposed therebetween. Contrarily, when an element is referred to as being "directly coupled" or "directly connected" to any other element, it should be understood that no element is interposed therebetween.

The terms as used in various embodiments of the present disclosure are used merely to describe a certain embodiment and are not intended to limit the present disclosure. As used herein, singular forms may include plural forms as well unless the context explicitly indicates otherwise. Further, all terms used herein, including technical and scientific terms, have the same meaning as commonly understood by those of skill in the art to which the present disclosure pertains. Such terms as those defined in a generally used dictionary are to be interpreted to have the meanings equal to the contextual meanings in the relevant field of art, and are not to be interpreted to have ideal or excessively formal meanings unless clearly defined in various embodiments of the present disclosure.

An electronic device according to various embodiments of the present disclosure may be a device including a communication interface 106. The electronic device according to various embodiments of the present disclosure may, for example, include at least one of a smartphone, a tablet personal computer (PC), a mobile phone, a video phone, an e-book reader, a desktop PC, a laptop PC, a netbook computer, a personal digital assistant (PDA), a portable multimedia player (PMP), an MP3 player, a mobile medical device, a camera, a wearable device (e.g., a head-mount-device (HMD) such as electronic glasses, electronic clothing, an electronic bracelet, an electronic necklace, an electronic appcessory, an electronic tattoo, or a smart watch), a television, a digital video disk (DVD) player, an audio, a refrigerator, an air conditioner, a vacuum cleaner, an oven, a microwave oven, a washing machine, an air cleaner, a set-top box, a TV box (e.g., Samsung HomeSyncTM, Apple TVTM, or Google TVTM), a game console, an artificial intelligence robot, a Television (TV), an electronic dictionary, an electronic key, a camcorder, medical equipment (e.g., a magnetic resonance angiography (MRA) machine, a magnetic resonance imaging (MRI) machine, a computed tomography (CT) scanner, or an ultrasonic machine), a navigation device, a global positioning system (GPS) receiver, an event data recorder (EDR), a flight data recorder (FDR), a vehicle infotainment device, electronic equipment for a ship (e.g., ship navigation equipment and a gyrocompass), avionics, security equipment, an industrial or home robot, a part of furniture or building/structure, an electronic board, an electronic signature receiving device, a projector, and various measuring instruments (e.g., a water meter, an electricity meter, a gas meter, or a wave meter), each of which may include an electronic device according to embodiments of the present disclosure may be a device including a communication function.

The electronic device according to various embodiments of the present disclosure may be a combination of one or more of the aforementioned various devices. Further, the electronic device according to various embodiments of the present disclosure may be a flexible device. Further, it will be apparent to those skilled in the art that the electronic device according to various embodiments of the present disclosure is not limited to the above-mentioned devices.

Hereinafter, an electronic device according to various embodiments of the present disclosure will be described with reference to the accompanying drawings. The term "user" as used in various embodiments of the present disclosure may indicate a person who uses an electronic device or a device (e.g., artificial intelligence electronic device) that uses an electronic device.

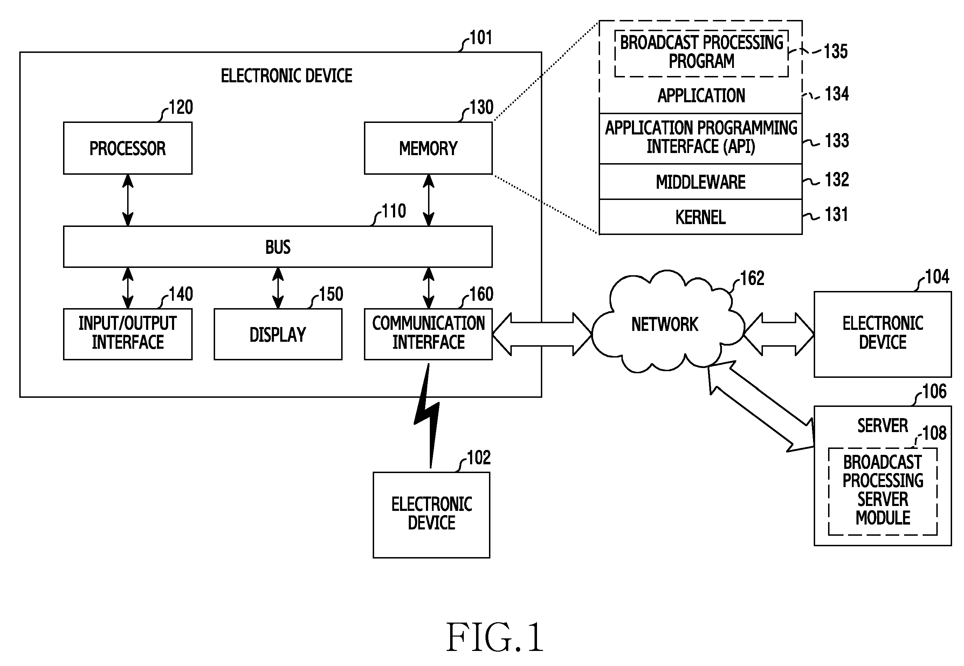

FIG. 1 illustrates a network environment including an electronic device according to various embodiments of the present disclosure. Referring to FIG. 1, the electronic device 101 may include at least one of a bus 110, a processor 120, a memory 130, an input/output interface 140, a display 150, and/or a communication interface 160. The bus 110 may be a circuit that connects the aforementioned elements to each other and transmits communication signals (for example, control messages) between the aforementioned elements.

The processor 120 may include any suitable type of processing circuitry, such as one or more general purpose processors (e.g., ARM-based processors), a Digital Signal Processor (DSP), a Programmable Logic Device (PLD), an Application-Specific Integrated Circuit (ASIC), a Field-Programmable Gate Array (FPGA), *etc.* In operation, the processor 120 may receive commands from the above-mentioned other elements (for example, the memory 130, the input/output interface 140, the display 150, and the communication interface 160) via the bus 110, interpret the received commands, and/or perform calculations or data processing according to the interpreted commands. One or more processors 120 may be included in the electronic device 101 to perform a predetermined function of the electronic device 101.

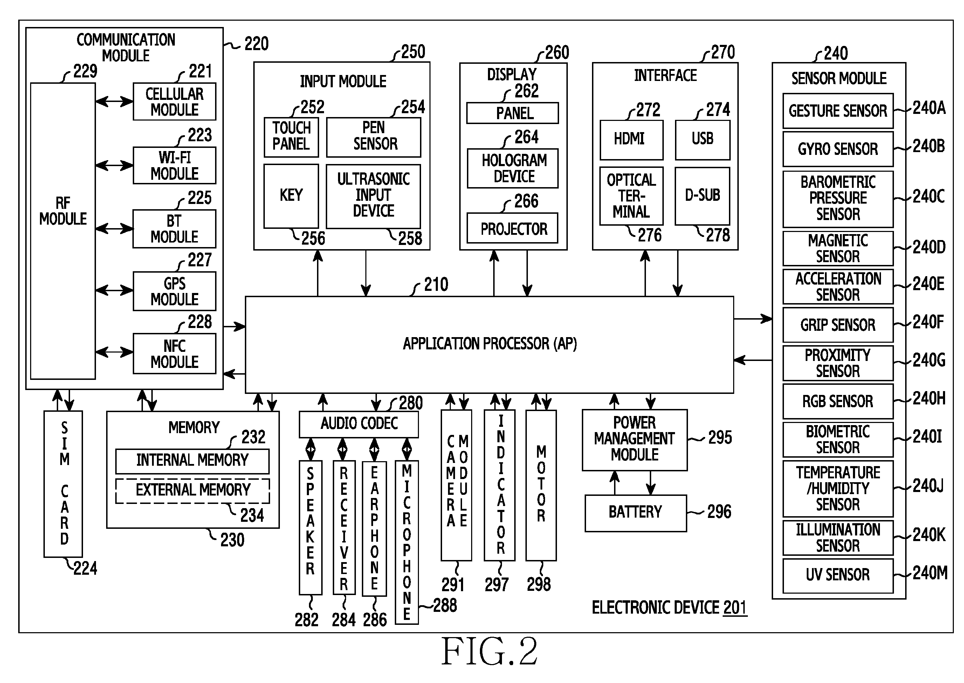

In FIG. 1, the AP and the MCU may be included in one IC package, or may be separately configured to be included in different IC packages, respectively. According to an embodiment, the MCU may be included in an IC package of the AP to be configured as one IC package. Although the processor 120 may include the AP or the MCU in FIG. 2, it is only one embodiment of the present disclosure. It is to be understood that the processor 120 may also perform operations of the AP and/or the MCU.

The AP may drive an operating system or an application program so as to control a plurality of hardware or via the execution of software components connected to the AP, and may process various pieces of data including multimedia data and perform calculations. The AP may be implemented by, for example, a System on Chip (SoC). According to an embodiment, the processor 120 may further include a Graphic Processing Unit (GPU) (not illustrated).

The MCU may be a processor configured to perform a predetermined operation. According to an embodiment, the MCU may acquire sensing information through one or more specified motion sensors (for example, gyro sensor, acceleration sensor, or geomagnetic sensor), compare the acquired sensing information, and determine the operational state of the specified motion sensors with reference to a database of the electronic device 101.

According to an embodiment, the AP or the MCU may load a command or data received from at least one of a non-volatile memory or other components connected to each of the AP and the MCU in a volatile memory, and may process the loaded command or data. Further, the AP or the CP may store data received from or generated by at least one of the other components in a non-volatile memory.

The memory 130 may include any suitable type of volatile or non-volatile memory, such as Random Access Memory (RAM), Read-Only Memory (ROM), Network Accessible Storage (NAS), cloud storage, a Solid State Drive (SSD), *etc.* In operation, the memory 130 may store commands or data received from or generated by the processor 120 or other components (for example, the input/output interface 140, the display 150, and the communication interface 160). The memory 130 may include programming modules, for example, a kernel 131, middleware 132, an Application Programming Interface (API) 133, applications 134, or the like. Each of the programming modules may be formed of software, firmware, or hardware, or a combination of two or more thereof.

The kernel 131 may control or manage the remaining programming modules, for example, system resources (for example, the bus 110, the processor 120, or the memory 130) used for executing operations or functions implemented in the middleware 132, the API 133, or the applications 134. Also, the kernel 131 may provide an interface by which the middleware 132, the API 133, or the applications 134 may access individual components of the electronic device 101 to control or manage them.

The middleware 132 may perform a relay function, which may allow the API 133 or the applications 134 to communicate with and exchange data with the kernel 131. Furthermore, with regard to task requests received from the applications 134, the middleware 132 may perform a control (for example, scheduling or load balancing) for the task requests using, for example, a method of assigning a priority, by which the system resources (for example, the bus 110, the processor 120, or the memory 130) of the electronic device 101 may be preferentially used, to at least one of the applications 134.

The API 133 is an interface used by the applications 134 to control a function provided by the kernel 131 or the middleware 132. The API 133 may include, for example, at least one interface or function, for example, an instruction, for a file control, a window control, image processing, a character control, or the like.

The applications 134 may include a short message service (SMS)/multimedia message service (MMS) application, an e-mail application, a calendar application, an alarm application, a health care application (for example, application for monitoring physical activity or blood glucose), and an environmental information application (for example, application for providing atmospheric pressure, humidity, or temperature information). The application 134 may correspond to an application associated with information exchange between the electronic device 101 and an external electronic device (for example, the electronic device 102 or the electronic device 104).

The application related to the information exchange may include, for example, a notification transmission application for transferring predetermined information to an external electronic device or a device management application for managing an external electronic device. The notification relay application may, for example, include a function of transferring, to an external electronic device (for example, the electronic device 104), notification information generated by other applications (for example, an SMS/MMS application, an e-mail application, a health management application, or an environmental information application) of the electronic device 101.

Additionally or alternatively, the notification relay application may receive notification information from, for example, the external electronic device (for example, the electronic device 104) and provide the received notification information to a user. For example, the device management application may manage (for example, install, delete, or update) functions for at least a part of the external electronic device (for example, the electronic device 104) communicating with the electronic device 101 (for example, turning on/off the external electronic device itself (or some elements thereof) or adjusting the brightness (or resolution) of a display), applications operating in the external electronic device, or services (for example, a telephone call service or a message service) provided by the external electronic device.

According to various embodiments, the applications 134 may include an application designated according to attributes (for example, the type of electronic device) of the external electronic device (for example, the electronic device 102 or the electronic device 104). For example, when the external electronic device is an MP3 player, the applications 134 may include an application related to the reproduction of music. Similarly, when the external electronic device is a mobile medical appliance, the applications 134 may include an application related to health care.

According to an embodiment, the applications 134 may include at least one of an application designated to the electronic device 101 and an application received from the external electronic device (for example, a server 106 or the electronic device 104). A broadcast processing program 135 may be provided with or included in the applications 134, or may be stored in the memory 130 as a separate program.

The broadcast processing program 135 may transmit information on a request for transmitting a broadcasting signal through the communication interface 160, receive a broadcast tuner list from the server 106, and receive the broadcasting signal from a broadcast tuner included in the broadcast tuner list. The broadcast processing program 135 may insert at least one piece of broadcast identification information associated with a particular broadcast, position information on the electronic device, and device identification information on the electronic device into the information on the request for transmitting the broadcasting signal.

The broadcast processing program 135 may insert information on at least one broadcast tuner determined based on information on a distance from the electronic device and communication state information among broadcast tuners, which can transmit the broadcasting signal, into the broadcast tuner list. The broadcast processing program 135 may process the broadcast tuner list including broadcast tuners having predetermined priorities. The broadcast processing program 135 may receive the broadcasting signal in response to a request from the server or the electronic device and transmit the received broadcasting signal to the electronic device.

The broadcast processing program 135 may include two or more broadcast transmission channels and transmit the particular broadcasting signal through at least one of the broadcast transmission channels. The broadcast processing program 135 may receive the broadcasting signal from a broadcasting station, a broadcast relay device, and at least one other broadcast tuner. The broadcast processing program 135 may identify that a reception speed of the broadcasting signal is slower than a predetermined speed and additionally receive the broadcasting signal from at least one other broadcast tuner identified in the broadcast tuner list. The broadcast processing program 135 may receive the broadcast tuner list from the server periodically or according to a predetermined event.

The input/output interface 140 may transfer a command or data input by a user through an input/output device (for example, various sensors such as an acceleration sensor and a gyro sensor and/or a device such as a keyboard or a touch screen) to the processor 120, the memory 130, the communication interface 160 through, for example, the bus 110. For example, the input/output interface 140 may provide the processor 120 with data corresponding to a touch of the user received as input through a touch screen.

Further, the input/output interface 140 may output a command or data, received from, for example, the processor 120, the memory 130, and/or the communication interface 160 via the bus 110, through an output unit (for example, speaker or display). For example, the input/output interface 140 may output voice data processed by the processor 120 to the user through a speaker.

The display 150 may display various pieces of information (for example, multimedia data, text data or the like.) to a user. Further, the display 150 may include a touch screen for receiving a command through a touch or a proximity touch on the display by an input means.

The communication interface 160 (for example, a communication module 220) may establish a communication connection between the electronic device 101 and an external device (for example, the electronic device 104 or the server 106). For example, the communication interface 160 may be connected to the network 162 through wireless communication or wired communication, and may communicate with an external device.

The wireless communication may include at least one of, for example, Wi-Fi, Bluetooth (BT), Near Field Communication (NFC), Global Positioning System (GPS) and cellular communication (for example LTE, LTE-A, CDMA, WCDMA, UMTS, WiBro, GSM, etc.). The wired communication may include at least one of, for example, a Universal Serial Bus (USB), a High Definition Multimedia Interface (HDMI), a Recommended Standard 232 (RS-232), and a Plain Old Telephone Service (POTS).

According to an embodiment, the network 162 may be a communications network. The communications network may include at least one of a computer network, the Internet, the Internet of things, and a telephone network. According to an embodiment, a protocol (for example, a transport layer protocol, data link layer protocol, or a physical layer protocol) for communication between the electronic device 101 and the external device may be supported by at least one of the application 134, the application programming interface 133, the middleware 132, the kernel 131, and the communication interface 160.

According to an embodiment, the server 106 may support the driving of the electronic device 101 by performing at least one operation (or function) implemented in the electronic device 101. For example, the server 106 may include the processor 120 for controlling the electronic device 101 to perform various embodiments of the present disclosure or a server module (for example, a server controller or a server processor (not shown)), which can support a specific module configured to perform various embodiments.

For example, the server module may include at least one element of the processor 120 or the specific module to perform at least one operation of the operations performed by the processor 120 or the specific module (for example, perform the operation on behalf of the processor 120 or the specific module). According to various embodiments, the server module may be a broadcast processing server module 108 of FIG. 1. Additional information on the electronic device 101 will be provided through FIGs. 2 to 10 below.

FIG. 2 is a block diagram of an electronic device according to various embodiments of the present disclosure. The electronic device 201 may constitute, for example, all or some of the electronic device 101 illustrated in FIG. 1, or expand all or some of the components of the electronic device 101. Referring to FIG. 2, the electronic device 201 may include at least one Application Processor (AP) 210, a communication module 220, a Subscriber Identifier Module (SIM) card 224, a memory 230, a sensor module 240, an input device 250, a display 260, an interface 270, an audio module 280, a camera module 291, a power management module 295, a battery 296, an indicator 297, and/or a motor 298.

One or more processors 210 may be included in the electronic device 101 to perform a predetermined function of the electronic device 101. According to an embodiment, the processor 210 may include one or more Application Processors (APs) and one or more Micro Control Unit (MCUs). According to another embodiment, the processor 210 may include one or more microcontrollers as applications or may be functionally connected to one or more microcontrollers.

In FIG. 1, the AP and the MCU may be included in one IC package, or may be separately configured to be included in different IC packages, respectively. According to an embodiment, the MCU may be included in an IC package of the AP to be configured as one IC package. Although the processor 210 includes the AP or the MCU in FIG. 2, it is only an embodiment provided for illustrative purposes, but the processor 210 may also perform operations of the AP and/or the MCU.

The AP may drive an operating system or an application program so as to control a plurality of hardware or software components connected to the AP, and may process various pieces of data including multimedia data and perform calculations. The AP may be implemented by, for example, a System on Chip (SoC). According to an embodiment, the processor 210 may further include a Graphic Processing Unit (GPU) (not illustrated).

The MCU may be a processor configured to perform a predetermined operation. According to an embodiment, the MCU may acquire sensing information through one or more predetermined motion sensors (for example, a gyro sensor 240B, an acceleration sensor 240E, or a geomagnetic sensor 140P), compare acquired sensing information, and determine an operation state of the predetermined sensor (for example, the geomagnetic sensor 140P) with reference to a database of the electronic device 101.

Further, although the MCU and the components of the sensor module 240 are illustrated as separate components in FIG. 2, the MCU may be implemented to include at least some of the components of the sensor module 240 (for example, at least one of the gyro sensor 240B, the acceleration sensor 240E, and the geomagnetic sensor 140P). According to an embodiment, the AP or the MCU may load a command or data received from at least one of a non-volatile memory and other components connected to each of the AP and the MCU in a volatile memory, and may process the loaded command or data. Further, the AP or the CP may store data received from or generated by at least one of the other components in a non-volatile memory.

The communication module 220 (for example, the communication interface 160) may perform data transmission/reception in communication between the electronic device 101 and other electronic devices (for example, the electronic device 102, the electronic device 104, or the server 106) connected thereto through a network. According to an embodiment, the communication module 220 may include a cellular module 221, a Wi-Fi module 223, a BT module 225, a GPS module 227, an NFC module 228, and/or a Radio Frequency (RF) module 229.

The cellular module 221 may provide a voice, a call, a video call, a text message service, or an Internet service through a communications network (for example, Long Term Evolution (LTE), LTE-A, Code Division Multiple Access (CDMA), Wideband CDMA (WCDMA), Universal Mobile Telecommunication System (UMTS), Wireless Broadband (WiBro), or Global System for Mobile communication (GSM)). Furthermore, the cellular module 221 may distinguish between and authenticate electronic devices in a communications network by using, for example, a subscriber identification module (for example, the SIM card 224). According to an embodiment, the cellular module 221 may perform at least some of the functions that the AP 210 may provide. For example, the cellular module 221 may perform at least some of the multimedia control functions.

According to an embodiment of the present disclosure, the cellular module 221 may include a communication processor (CP). Furthermore, the cellular module 221 may be implemented by, for example, a SoC. Although the components such as the cellular module 221 (for example, the communication processor), the memory 230, and the power management module 295 are illustrated as components separated from the AP 210 in FIG. 2, the AP 210 may include at least some of the aforementioned components (for example, the cellular module 221) in an embodiment.

According to an embodiment, the AP 210 or the cellular module 221 (for example, the communication processor) may load a command or data received from at least one of a non-volatile memory and other components connected thereto into a volatile memory and process the loaded command or data. Further, the AP 210 or the cellular module 221 may store data received from or generated by at least one of other components in a non-volatile memory.

For example, each of the Wi-Fi module 223, the BT module 225, the GPS module 227, and the NFC module 228 may include a processor for processing data transmitted/received through the corresponding module. Although the cellular module 221, the WiFi module 223, the BT module 225, the GPS module 227, and the NFC module 228 are illustrated as separate blocks in FIG. 2, at least some (for example, two or more) of the cellular module 221, the WiFi module 223, the BT module 225, the GPS module 227, and the NFC module 228 may be included in one Integrated Chip (IC) or one IC package in one embodiment. For example, at least some (for example, the communication processor corresponding to the cellular module 221 and the WiFi processor corresponding to the WiFi module 223) of the processors corresponding to the cellular module 221, the WiFi module 223, the BT module 225, the GPS module 227, and the NFC module 228 may be implemented as one SoC.

The RF module 229 may transmit/receive data, for example, RF signals. Although not illustrated in the drawing, the RF module 229 may, for example, include a transceiver, a Power Amp Module (PAM), a frequency filter, a Low Noise Amplifier (LNA), or the like. Further, the RF module 229 may further include a component for transmitting/receiving electronic waves over a free air space in wireless communication, for example, a conductor, a conducting wire or the like. Although the cellular module 221, the Wi-Fi module 223, the BT module 225, the GPS module 227, and the NFC module 228 share one RF module 229 in FIG. 2, at least one of the cellular module 221, the Wi-Fi module 223, the BT module 225, the GPS module 227, and the NFC module 228 may transmit/receive an RF signal through a separate RF module in one embodiment.

The SIM card 224 may be a card including a subscriber identification module, and may be inserted into a slot formed in a predetermined portion of the electronic device. The SIM card 224 may include unique identification information (for example, an integrated circuit card identifier (ICCID)) or subscriber information (for example, an international mobile subscriber identity (IMSI)).

The memory 230 (for example, the memory 130) may include an internal memory 232 or an external memory 234. The internal memory 232 may include at least one of a volatile memory (for example, a Dynamic Random Access Memory (DRAM), a Static RAM (SRAM), a Synchronous Dynamic RAM (SDRAM), or the like) or a non-volatile memory (for example, a One Time Programmable Read Only Memory (OTPROM), a Programmable ROM (PROM), an Erasable and Programmable ROM (EPROM), an Electrically Erasable and Programmable ROM (EEPROM), a mask ROM, a flash ROM, a NAND flash memory, a NOR flash memory, or the like).

According to an embodiment, the internal memory 232 may be a Solid State Drive (SSD). The external memory 234 may further include a flash drive, for example, a Compact Flash (CF), a Secure Digital (SD), a Micro Secure Digital (Micro-SD), a Mini Secure Digital (Mini-SD), an extreme Digital (xD), a memory stick, or the like. The external memory 234 may be functionally connected to the electronic device 201 through various interfaces. According to an embodiment, the electronic device 201 may further include a storage device (or storage medium) such as a hard drive.

The sensor module 240 measures a physical quantity or senses an operation state of the electronic device 201, and converts the measured or sensed information into an electric signal. The sensor module 240 may include, for example, at least one of a gesture sensor 240A, a gyro sensor 240B, an atmospheric pressure sensor 240C, a magnetic sensor 240D, an acceleration sensor 240E, a grip sensor 240F, a proximity sensor 240G, an RGB sensor 240H, a biometric sensor 240I, a temperature/humidity sensor 240J, an illumination sensor 240K, and an Ultra Violet (UV) sensor 240M. Additionally or alternatively, the sensor module 240 may, for example, include an E-nose sensor (not shown), an electromyography (EMG) sensor (not shown), an electroencephalogram (EEG) sensor (not shown), an electrocardiogram (ECG) sensor (not shown), an Infrared (IR) sensor (not shown), an iris sensor (not shown), a fingerprint sensor (not shown), and the like. The sensor module 240 may further include a control circuit for controlling one or more sensors included therein.

The input device 250 may include a touch panel 252, a (digital) pen sensor 254, a key 256, or an ultrasonic input device 258. The touch panel 252 may detect a touch input in at least one of, for example, a capacitive type, a resistive type, an infrared type, and an acoustic wave type. The touch panel 252 may further include a control circuit. The capacitive type touch panel may detect a physical contact or proximity. The touch panel 252 may further include a tactile layer. In this case, the touch panel 252 may provide a user with a tactile reaction.

The (digital) pen sensor 254 may be implemented by, for example, using a method identical or similar to a method of receiving a touch input from a user, or using a separate recognition sheet. The key 256 may include, for example, a physical button, an optical key, or a keypad. The ultrasonic input device 258 is a device, which may identify data by detecting an acoustic wave with a microphone (for example, a microphone 288) of the electronic device 201 through an input unit generating an ultrasonic signal, and may perform wireless detection. According to an embodiment, the electronic device 201 may also receive a user input from an external device (for example, a computer or server) connected thereto by using the communication module 220.

The display 260 (for example, the display 150) may include a panel 262, a hologram device 264, or a projector 266. For example, the panel 262 may be, for example, a Liquid Crystal Display (LCD), an Active Matrix Organic Light Emitting Diode (AM-OLED), or the like. The panel 262 may be implemented to be, for example, flexible, transparent, or wearable. The panel 262 may be implemented by a single module together with the touch panel 252. The hologram device 264 may show a three-dimensional image in the air by using an interference of light. The projector 266 may display an image by projecting light onto a screen. The screen may be located, for example, inside or outside the electronic device 201. According to an embodiment, the display 260 may further include a control circuit for controlling the panel 262, the hologram device 264, or the projector 266.

The interface 270 may include, for example, a High-Definition Multimedia Interface (HDMI) 372, a Universal Serial Bus (USB) 274, an optical interface 276, or a D-subminiature (D-sub) 278. The interface 270 may be included in, for example, the communication interface 160 illustrated in FIG. 1. Additionally or alternatively, the interface 270 may include, for example, a Mobile High-definition Link (MHL) interface, a Secure Digital (SD) card/Multi-Media Card (MMC) interface, or an Infrared Data Association (IrDA) standard interface.

The audio module 280 may bidirectionally convert a sound and an electrical signal. At least some components of the audio module 280 may be included in, for example, the input/output interface 140 illustrated in FIG. 1. The audio module 280 may process voice information input or output through, for example, a speaker 282, a receiver 284, earphones 286, or the microphone 288. The camera module 291 is a device that may photograph still and moving images, and may include one or more image sensors (for example, a front sensor or a rear sensor, not shown), a lens (not shown), an image signal processor (ISP) (not shown), or a flash (for example, an LED or a xenon lamp, not shown) according to an embodiment.

The power management module 295 may manage the supply of power to the electronic device 201. Although not illustrated, the power management module 295 may include, for example, a Power Management Integrated Circuit (PMIC), a charger Integrated Circuit (IC), or a battery or fuel gauge. According to various embodiments, the PMIC may be mounted within an integrated circuit or a SoC semiconductor. Charging methods may be classified into a wired charging method and a wireless charging method. The charger IC may charge a battery and may prevent an overvoltage or excess current from being induced or flowing from a charger.

According to an embodiment, the charger IC may include a charger IC for at least one of the wired charging and the wireless charging. Examples of the wireless charging may include magnetic resonance charging, magnetic induction charging, and electromagnetic charging, and an additional circuit such as a coil loop, a resonance circuit, and a rectifier may be added for the wireless charging.

The battery gauge may measure, for example, a residual quantity of the battery 296, and a voltage, a current, or a temperature during the charging. The battery 296 may store or generate electricity and may supply power to the electronic device 201 using the stored or generated electricity. The battery 296 may include, for example, a rechargeable battery or a solar battery.

The indicator 297 may display a specific state of the electronic device 201 or a part thereof (for example, the AP 210), for example, a boot-up state, a message state, or a state of charge (SOC). The motor 298 may convert an electrical signal into a mechanical vibration. Although not illustrated, the electronic device 201 may include a processing device (for example, a GPU) for supporting mobile TV. The processing unit for supporting mobile TV may process, for example, media data pursuant to a certain standard of Digital Multimedia Broadcasting (DMB), Digital Video Broadcasting (DVB), or media flow.

Each of the above-described elements of the electronic device according to various embodiments of the present disclosure may include one or more components, and the name of a corresponding element may vary according to the type of electronic device. The electronic device according to various embodiments of the present disclosure may include at least one of the above-described elements and may exclude some of the elements or further include other additional elements. Further, some of the elements of the electronic device according to various embodiments of the present disclosure may be coupled to form a single entity while performing the same functions as those of the corresponding elements before the coupling.

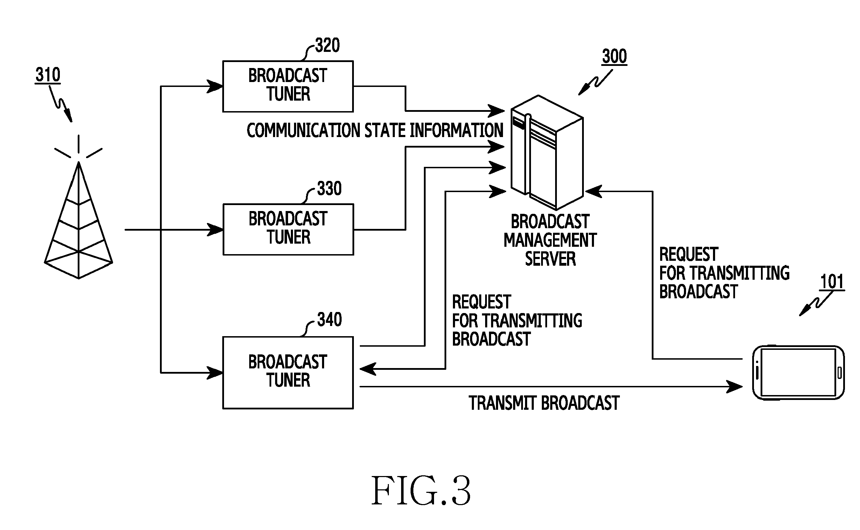

FIG. 3 is a diagram of an example of a system, according to various embodiments of the present disclosure. According to various embodiments, when receiving a broadcast, the electronic device 101 may directly receive a broadcasting signal output (transmitted) by a broadcasting station and may receive a broadcasting signal from a relay device 310, which receives the broadcasting signal from the broadcasting station and relays the broadcasting signal to at least one device, but the reception is not limited thereto and the broadcasting signal may be received through various methods.

According to an embodiment, the electronic device 101 may receive the broadcasting signal from a broadcast tuner, which receives the broadcasting signal from the relay device 310 and outputs the broadcasting signal to a broadcast output device (for example, a TV). The broadcast tuner may be designated by a broadcast management server 300.

According to an embodiment, in order to output a selected broadcast (for example, a broadcasting channel) based on a user input, the electronic device 101 may transmit a request for the selected broadcasting signal to the broadcast management server 300. The request may include broadcast identification corresponding to the selected broadcast.

The electronic device 101 may receive a broadcast tuner list including device identification information identifying at least one broadcast tuner, which can output the selected broadcasting signal, from the broadcast management server 300, and receive the selected broadcasting signal from at least one broadcast tuner (for example, the broadcast tuner 340) included in the broadcast tuner list.

The broadcast management server 300 may transmit/receive (or synchronize communication state information) communication state information to/from at least one broadcast tuner (for example, a broadcast tuner 320, a broadcast tuner 330, or the broadcast tuner 340). The broadcast management server 300 may determine a broadcast tuner in a state (for example, a standby state) where at least one channel is not used, from broadcast tuners having two or more channels based on the communication state information.

The broadcast management server 300 may generate a broadcast management server table including identification information corresponding to the determined broadcast tuner. When configuring the broadcast management server table, the broadcast management server 300 may include an indication of the position of the broadcast tuner (for example, coordinates) and/or communication state information (for example, an indication of data transmission/reception speed and/or amount of traffic).

The broadcast management server 300 may receive an output request for a particular broadcasting signal from the electronic device 101. The broadcast management server 300 may generate a broadcast tuner list including information corresponding to at least one broadcast tuner, which outputs a particular broadcasting signal to the electronic device 101, based on the received broadcast output request.

The broadcast management server 300 may insert device identification information corresponding to the broadcast tuner, which can receive the particular broadcasting signal from the broadcasting station, the broadcast relay device, or at least one broadcast tuner and output the received broadcasting signal to the electronic device 101, into the broadcast tuner list. When inserting the information corresponding to the broadcast tuner into the broadcast tuner list, the broadcast management server 300 may determine a priority based on a predetermined condition.

According to an embodiment, when the broadcast management server 300 receives a particular broadcasting signal requested to be output by the electronic device 101 from the broadcasting station, from at least one other broadcast tuner, or from the broadcast relay device, or transmits the particular broadcasting signal to the electronic device 101 based on a communication environment of the broadcast tuner, the broadcast management server 300 may assign a higher priority (prior order) to the broadcast tuner having a good communication state (or having small traffic).

According to an embodiment, the broadcast management server 300 may assign a higher priority based on the position of the broadcast tuner (for example, the broadcast tuner 320, the broadcast tuner 330, or the broadcast tuner 340) and the position of the electronic device 101 having made a request for transmitting a particular broadcasting signal. For example, broadcast tuners that are closer to the electronic device 101 may be given higher priorities than broadcast tuners that are further away.

When generating a broadcast tuner list in accordance with the request for transmitting the received broadcasting signal, the broadcast management server 300 may determine priorities of broadcast tuners, which are determined based on a combination of two or more of the aforementioned conditions. The broadcast management server 300 may transmit the generated broadcast tuner list to the electronic device 101. The broadcast management server 300 may transmit a request for receiving a particular broadcasting signal and transmitting the received broadcasting signal to the electronic device 101 to a first priority broadcast tuner (for example, the broadcast tuner 340) included in the broadcast tuner list. The broadcast management server 300 may perform the operation of the server 106 of FIG. 1.

The broadcast tuner (for example, a TV tuner, a multi-tuner, or a set-top box) may be a device, which receives a broadcasting signal from the broadcasting station or the broadcast relay device 310 and outputs the broadcast to at least one output device. The broadcast tuner may receive two or more broadcasting signals and output a broadcast corresponding to at least one of the received broadcasting signals through the output device.

According to an embodiment, the broadcast tuner may output a screen, which displays one broadcast, and additionally output at least one other broadcast in a predetermined position of the display through a function of dividing the screen into two or more channel screens such as Picture InPicture (PIP), Picture On Picture (POP), or Picture By Picture (PBP). The broadcast tuner may transmit at least one of the two or more received broadcast signals to another electronic device (for example, the electronic device 101).

According to an embodiment, the broadcast tuner may receive a first broadcasting signal to be output to a main screen of the display and a second broadcasting signal to be output to a PIP screen, output the broadcasting signals to the display, and transmit the second broadcasting signal to the electronic device 101. When transmitting the second broadcasting signal to the electronic device 101, the broadcast tuner may transmit the broadcasting signal by a request from the broadcast management server 300 or a request from the electronic device 101. When the broadcast tuner transmits the second broadcasting signal, the transmission is not limited to the one to one communication scheme between the broadcast tuner and the electronic device 101, but the broadcast tuner may use a multicasting and/or unicasting scheme for the broadcast transmission. The electronic device 101 may output the received second broadcasting signal to the display 150.

According to various embodiments, although it has been described that the electronic device 101 transmits a request for a broadcasting signal to the broadcast management server 300 and receives a broadcast from a predetermined broadcast tuner (for example, the broadcast tuner 340), the present disclosure is not limited thereto, and the electronic device 101 may include at least a part of the broadcast management server 300 and/or the broadcast tuner or perform the operations of the broadcast management server 300 and/or the broadcast tuner.

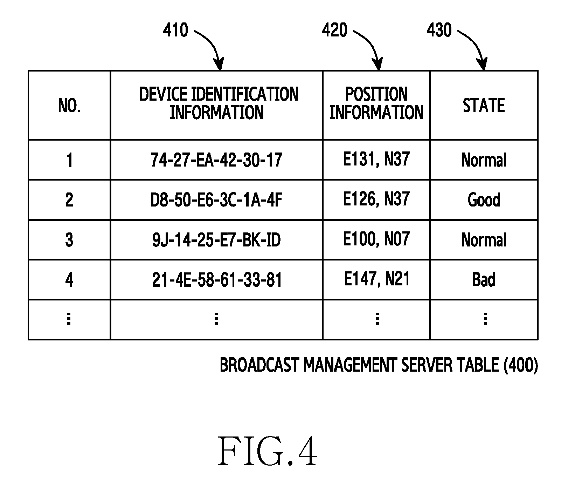

FIG. 4 is a diagram of an example of a broadcast management server table, according to various embodiments of the present disclosure.

According to an embodiment, the broadcast tuner may transmit device identification information corresponding to the broadcast tuner, and data transmission/reception speed information, traffic information, and/or position of the broadcast tuner in a communication environment in which a broadcasting signal is received from the broadcasting station, the broadcast relay device, or another broadcast tuner, to the broadcast management server.

The broadcast management server may generate a broadcast management server table 400 for at least one broadcast tuner based on the communication state information received from the broadcast tuner. The broadcast management server table may include at least one item of device identification information 410 on the broadcast tuner, position information 420 on the broadcast tuner, and a communication state 430 of the broadcast tuner.

The broadcast management server may receive communication state information from the broadcast tuner on every predetermined cycle or according to a predetermined event and renew (or update) the broadcast management server table 400. According to various embodiments, when the broadcast management server receives a request for transmitting a particular broadcasting signal from another electronic device (for example, the electronic device 102), the broadcast management server may generate a broadcast tuner list based on the broadcast management server table 400.

According to an embodiment, the broadcast management server may generate the broadcast tuner list based on communication state information of the broadcast tuner for transmitting a particular broadcasting signal to another electronic device (for example, the electronic device 102) or a broadcast management server table including position information corresponding to the broadcast tuner based on the request for transmitting the received broadcasting signal. In addition, the broadcast tuner list may be re-generated when the broadcast management server table is updated.

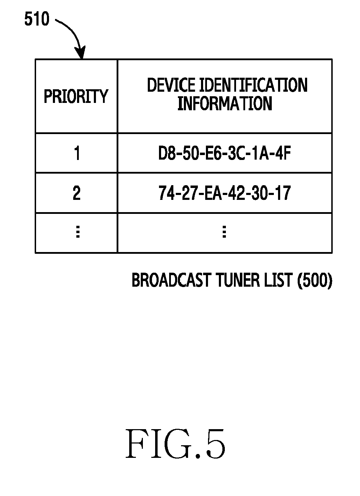

FIG. 5 is a diagram of an example of a broadcast tuner list, according to various embodiments of the present disclosure. According to various embodiments, the electronic device 101 may transmit a request for a broadcasting signal of a selected broadcast based on a user input to the broadcast management server. When transmitting the request for the broadcasting signal to the broadcast management server, the electronic device 101 may also transmit device identification information corresponding to the electronic device 101 and position information corresponding to the electronic device 101.

The electronic device 101 may receive the generated broadcast tuner list based on the request for the broadcasting signal from the broadcast management server. When generating the broadcast tuner list, the broadcast management server may generate the broadcast tuner list based on information corresponding to at least one broadcast tuner included in the broadcast management server table (for example, the table 400 of FIG. 4).

The broadcast management server may insert at least one broadcast tuner included in the broadcast management server table into the broadcast tuner list. When determining the broadcast tuner to be included in the broadcast tuner list, the broadcast management server may determine the broadcast tuner based on the request for the broadcasting signal received from the electronic device 101, the communication state information corresponding to the broadcast tuner for transmitting a particular broadcasting signal included in the broadcast management server table to another electronic device (for example, the electronic device 102), and the position of the broadcast tuner, and assign a priority 510 to the determined broadcast tuner.

The electronic device 101 may receive a particular broadcasting signal transmitted by a predetermined broadcast tuner based on the broadcast tuner list received from the broadcast management server. According to an embodiment, the electronic device 101 may make a request for transmitting a particular broadcasting signal to a broadcast tuner (for example, D8-50-E6-3C-1A-4F) determined as a first priority broadcast tuner in broadcast tuner list.

The electronic device 101 may receive the particular broadcasting signal from the broadcast tuner (for example, D8-50-E6-3C-1A-4F) and output the received broadcasting signal through the display 150 and/or a speaker (for example, the speaker 282). In addition, when the broadcast management server updates the broadcast management server table, the electronic device 101 may receive a re-generated broadcast tuner list based on the updated broadcast management server table.

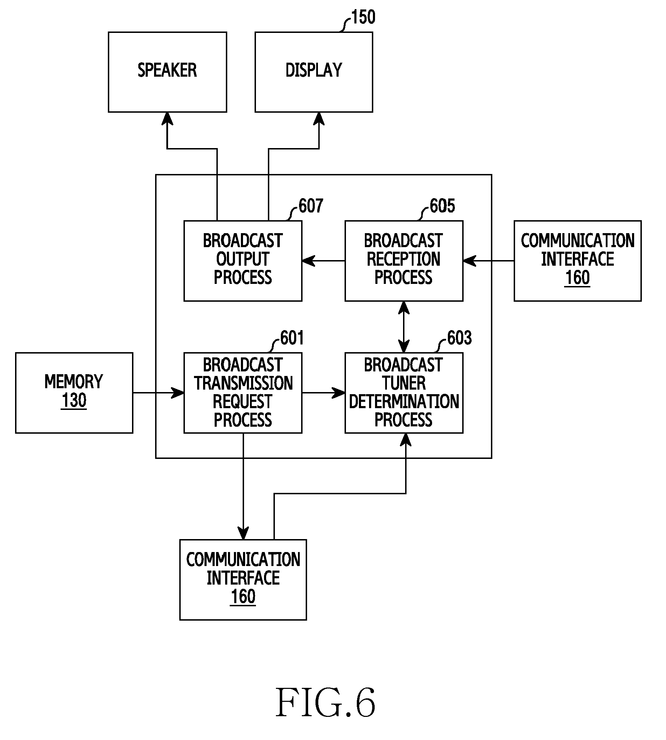

FIG. 6 is a block diagram of an example of an architecture for distributing broadcasting signals, according to various embodiments of the present disclosure. According to various embodiments, the electronic device 101 may perform at least one process among a broadcast transmission request process 601, a broadcast tuner determination process 603, a broadcast reception process 605, and a broadcast output process 607 as operations for making a request for transmitting a particular broadcasting signal to the broadcast management server, receiving a broadcast tuner list from the broadcast management server, and receiving a particular broadcasting signal from a broadcast tuner included in the broadcast tuner list.

The broadcast transmission request process 601 may make a request for transmitting a broadcasting signal corresponding to a particular broadcast (for example, a channel) to the broadcast management server. According to an embodiment, the processor 120 may make a request for transmitting a particular broadcasting signal to the broadcast management server based on a user input for selecting a particular broadcast in the electronic device 101. When transmitting the request for transmitting the particular broadcasting signal to the broadcast management server, the processor 120 may also transmit at least one piece of device identification information corresponding to the electronic device 101, position information corresponding to the electronic device 101, communication state information corresponding to the electronic device 101 (for example, a communication scheme of the electronic device 101).

The broadcast tuner determination process 603 may select a broadcast tuner to receive the broadcasting signal of the particular broadcast selected based on the user input. According to an embodiment, the processor 120 may receive a broadcast tuner list from the broadcast management server, which has made the request for transmitting the particular broadcasting signal. The broadcast tuner list may include information corresponding to at least one broadcast tuner which can transmit (or output) the particular broadcasting signal selected in the electronic device 101 to the electronic device 101.

In addition, the information corresponding to the broadcast tuner included in the broadcast tuner list may be information identifying a state in which the priority is assigned to the broadcast tuner. The processor 120 may determine the broadcast tuner to receive the particular broadcasting signal based on the broadcast tuner list. According to an embodiment, when determining the broadcast tuner, the processor 120 may determine the broadcast tuner determined to have the highest priority in the broadcast tuner list as a device to receive the particular broadcasting signal.

The broadcast reception process 605 may receive the particular broadcasting signal from the predetermined broadcast tuner. According to an embodiment, the processor 120 may receive the particular broadcasting signal transmitted by the determined broadcast tuner with reference to the broadcast tuner list. Alternatively, the processor 120 may receive the particular broadcasting signal transmitted by the broadcast tuner by making a request for transmitting the particular broadcasting signal to the broadcast tuner determined through the broadcast tuner list.

The broadcast output process 607 may output the received broadcasting signal to the electronic device 101. According to an embodiment, the processor 120 may output the received broadcasting signal through the display 150 and/or the speaker 282 of the electronic device 101. Further, the processor 120 may transmit (for example, unicast or multicast) the received particular broadcasting signal based on a request from the broadcast management server or another electronic device (for example, the electronic device 102).

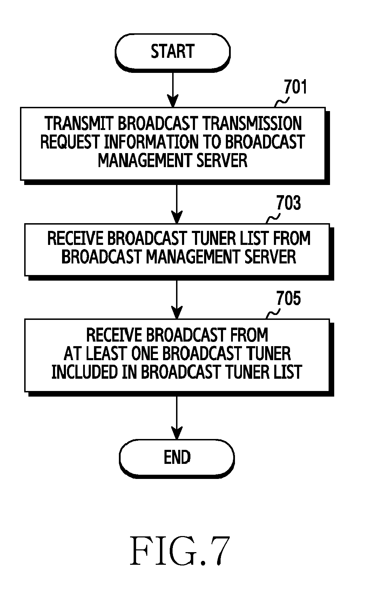

FIG. 7 is a flowchart of an example of a process for distributing broadcasting signals, according to various embodiments of the present disclosure. In operation 701, the electronic device 101 may transmit a broadcast transmission request to the broadcast management server. According to an embodiment, the electronic device 101 may perform an operation for reproducing a particular broadcast based on a user input. In order to reproduce the particular broadcast, the electronic device 101 may transmit a request for a particular broadcasting signal to the broadcast management server. When making the request for the particular broadcasting signal, the electronic device 101 may also transmit at least one piece of device identification information corresponding to the electronic device 101 and position information corresponding to the electronic device 101.

In operation 703, the electronic device 101 may receive a broadcast tuner list from the broadcast management server. The electronic device 101 may determine a broadcast tuner based on information corresponding to at least one broadcast tuner included in the received broadcast tuner list. When determining the broadcast tuner, the electronic device 101 may determine a device, which has a high priority, as the broadcast tuner to receive the particular broadcasting signal based on the information corresponding to the broadcast tuner included in the broadcast tuner list.

In operation 705, the electronic device 101 may receive the particular broadcasting signal from the determined broadcast tuner. According to an embodiment, when the determined broadcast tuner transmits the particular broadcasting signal, the electronic device 101 may receive the transmitted broadcasting signal. When the determined broadcast tuner does not transmit the broadcasting signal, the electronic device 101 may make a request for transmitting the particular broadcasting signal. The electronic device 101 may end the embodiment of FIG. 7 after performing operation 705.

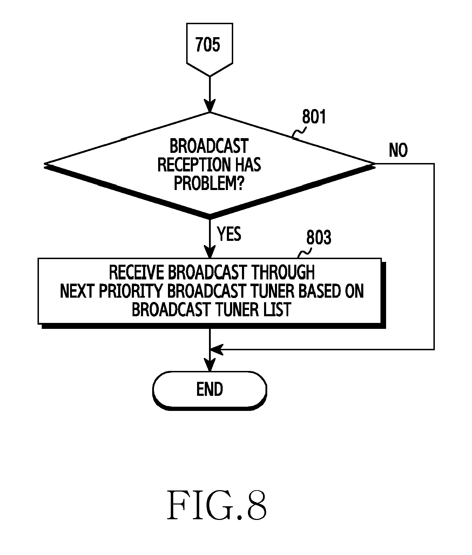

FIG. 8 is a flowchart of an example of a sub-process, according to various embodiments of the present disclosure. In operation 801, the electronic device 101 may identify that reception of a particular broadcasting signal has an error. According to an embodiment, when the electronic device is receiving a particular broadcasting signal from the broadcast tuner, reception of the particular broadcasting signal may stop (or cease) without termination of reception of a broadcast based on a user input.

According to an embodiment, the electronic device 101 may identify that the broadcast tuner does not transmit the particular broadcasting signal after the electronic device 101 transmits a request for transmitting the particular broadcasting signal again to the broadcast tuner by a predetermined number of times (for example, three times). When it is identified that there is a problem with the reception of the particular broadcasting signal, the electronic device 101 may perform operation 803. When it is identified that there is no problem, the electronic device 101 may end the embodiment of the FIG. 8.

In operation 803, when the electronic device 101 is receiving a particular broadcasting signal from the broadcast tuner, if the reception of the particular broadcasting signal may stop (or cease) without termination of reception of a broadcast based on a user input, the electronic device 101 may make a request for transmitting the particular broadcasting signal again to the broadcast tuner.

When the broadcast tuner does not transmit the particular broadcasting signal after the electronic device 101 transmits a request for transmitting the particular broadcasting signal again to the broadcast tuner by a predetermined number of times (for example, three times), the electronic device 101 may make a request for transmitting the particular broadcasting signal to a next priority broadcast tuner determined to have a next priority in the broadcast tuner list received from the broadcast management server.

Further, the electronic device 101 may receive the particular broadcast signals from two or more broadcast tuners, and combine the received broadcasting signals and output the combined broadcasting signal. According to an embodiment, when the electronic device 101 is receiving a particular broadcasting signal through a first broadcast tuner, if a reception state of the broadcasting signal meets a predetermined condition (for example, if a reception speed is slower than a predetermined speed), the electronic device 101 may determine at least one second broadcast tuner among broadcast tuners having priorities lower than a priority of the first broadcast tuner with reference to the broadcast tuner list and receive particular broadcasting signals from the first broadcast tuner and the second broadcast tuner.

According to various embodiments, when the electronic device 101 cannot receive the particular broadcasting signal through any broadcast tuner among the broadcast tuners included in the broadcast tuner list, the electronic device 101 may directly receive the particular broadcasting signal transmitted by the broadcasting station or the broadcast relay device. The electronic device 101 may end the embodiment of FIG. 8 after performing operation 803.

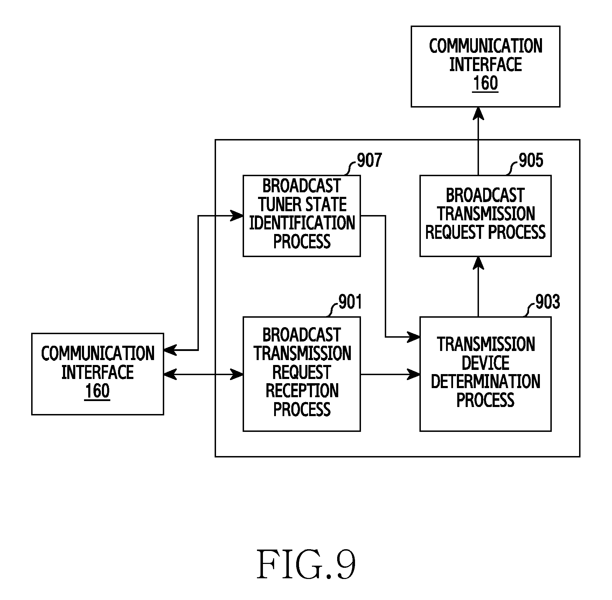

FIG. 9 is a block diagram of an example of an architecture for distributing broadcasting signals, according to various embodiments of the present disclosure. According to various embodiments, the electronic device 101 may perform at least one process of a broadcast tuner state identification process 907, a broadcast transmission request reception process 901, a transmission device determination process 903, and a broadcast transmission request process 905 as an operation for making a request for receiving a request for transmitting a particular broadcasting signal from at least one other electronic device (for example, the electronic device 102), generating a broadcast tuner list based on a broadcast tuner state (for example, which may be identified through a broadcast management server table), transmitting the broadcast tuner list to the electronic device 101, and/or transmitting a particular broadcast to at least one broadcast tuner among the broadcast tuners included in the broadcast tuner list.

The broadcast tuner state identification process 907 may receive communication state information or channel use information from at least one broadcast tuner and identify whether broadcast transmission is possible. According to an embodiment, the processor 120 may receive communication state information and/or channel use information from at least one broadcast tuner through the communication interface 160.

The communication state information may be information identifying a communication environment or a communication speed between the broadcast tuner and the broadcasting station, the broadcast relay device, or another broadcast tuner. Further, the channel use information may include information identifying an operational state of a broadcast transmission channel or a broadcast reception channel of the broadcast tuner. For example, when the broadcast tuner enables two-channel transmission, the channel use information may include information identifying whether each channel transmits a broadcasting signal.

The processor 120 may construct a database (for example, the broadcast management server table) based on the communication state information and/or the channel use information received from at least one broadcast tuner. The processor 120 may receive the communication state information and/or the channel use information from the broadcast tuner at a predetermined time interval or event, and update the database.

The broadcast transmission request reception process 901 may receive a request for transmitting the particular broadcasting signal from at least one other electronic device (for example, the electronic device 102). According to an embodiment, the processor 120 may identify the position of the electronic device 102 and/or information corresponding to a particular broadcast based on the received request.

The transmission device determination process 903 may determine at least one broadcast tuner to transmit the particular broadcast signal to the electronic device 102 having requested the transmission of the particular broadcasting signal. According to an embodiment, the processor 120 may determine a broadcast tuner having at least one unoccupied channel (for example, a broadcast tuner which can transmit the particular broadcasting signal to the electronic device 102) with reference to the database (for example, broadcast management server table).

The processor 120 may generate information corresponding to the determined broadcast tuner in the form of a list (for example, the broadcast tuner list). The processor 120 may determine a priority of broadcast tuner information included in the broadcast tuner list. According to an embodiment, the processor 120 may determine the priority based on a communication environment for transmitting the particular broadcasting signal to the electronic device 102 through at least one channel and a distance between the electronic device 102 and the broadcast tuner.

The broadcast transmission request process 905 may allow the broadcast tuner to transmit the particular broadcasting signal to the electronic device 102 based on the determined broadcast tuner list. According to an embodiment, the processor 120 may transmit the broadcast tuner list to the electronic device 102, which has made the request for transmitting the particular broadcasting signal. Further, the processor 120 may allow the broadcast tuner determined to the first priority in the broadcast tuner list to receive the particular broadcasting signal and transmit the received particular broadcasting signal to the electronic device 102.

When making a request for transmitting the particular broadcasting signal to the broadcast tuner, the processor 120 may transmit device identification information corresponding to the electronic device 102 so that the electronic device 102 is connected through network communication.

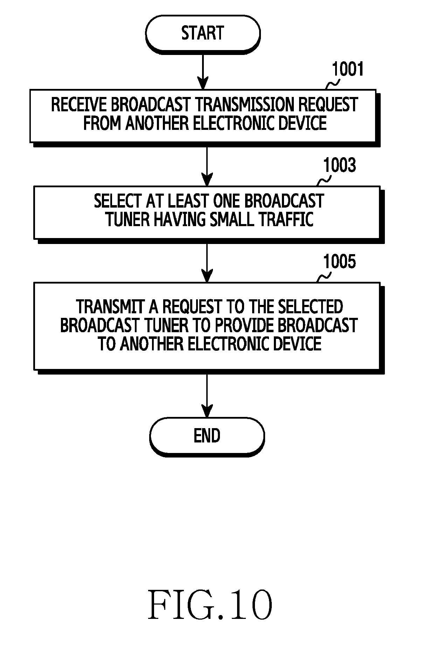

FIG. 10 is a flowchart of an example of a process for distributing broadcasting signals, according to various embodiments of the present disclosure. In operation 1001, the electronic device 101 may receive a request for transmitting a particular broadcasting signal from another electronic device (for example, the electronic device 102). According to an embodiment, the electronic device 101 may receive the request for transmitting the particular broadcasting signal, position information corresponding to the electronic device 102, and identification information corresponding to the electronic device 102 from the electronic device 102.

In operation 1003, the electronic device 101 may determine at least one broadcast tuner having small traffic (which can be used as a condition for determining a communication environment) among broadcast tuners 102 (for example, having at least one unoccupied channel for transmitting the broadcasting signal), which can transmit the broadcasting signal to the electronic device , based on the received information. According to an embodiment, the electronic device 101 may identify communication states of the determined broadcast tuners, assign a higher priority to a broadcast tuner having smaller traffic, and generate a broadcast tuner list.

In operation 1005, the electronic device 101 may be configured to allow the electronic device 102 to receive the particular broadcasting signal based on the determined broadcast tuner list. According to an embodiment, the electronic device 101 may submit a request for outputting or transmitting the particular broadcasting signal to the electronic device 102 to the broadcast tuner determined to have the first priority in the broadcast tuner list. Further, the electronic device 101 may transmit the broadcast tuner list to the electronic device 102. The electronic device 102 having received the broadcast tuner list may receive the particular broadcasting signal from the broadcast tuner according to the predetermined priority in the broadcast reception list. The electronic device 101 may end the embodiment of FIG. 10 after performing operation 1005.

Various embodiments performed by the electronic device 101 may be operations performed by a control of the processor 120. The electronic device 101 may include a module separate from the processor 120, which is programmed to control the various embodiments of the present disclosure. The separate module programmed to control the various embodiments of the present disclosure may operate under a control of the processor 120.

According to various embodiments, the processor 120 may be configured to transmit broadcasting signal transmission request to the server through the communication interface, receive the broadcast tuner list from the server, and receive the broadcasting signal from the broadcast tuner included in the broadcast tuner list. The processor 120 may insert at least one piece of broadcast identification information corresponding to a particular broadcast, position information corresponding to the electronic device, and device identification information corresponding to the electronic device into the information corresponding to the request for transmitting the broadcasting signal.

The processor 120 may insert information corresponding to a distance from the electronic device and communication state information among broadcast tuners, which can transmit the broadcasting signal, into the broadcast tuner list. The processor 120 may process the broadcast tuner list including broadcast tuners having predetermined priorities. The processor 120 may receive the broadcasting signal by a request from the server or the electronic device and transmit the received broadcasting signal to the electronic device. The processor 120 may include two or more broadcast transmission channels and transmit the particular broadcasting signal through at least one of the broadcast transmission channels.

The processor 120 may receive the broadcasting signal from a broadcasting station, a broadcast relay device, and at least one other broadcast tuner. The processor 120 may identify that a reception speed of the broadcasting signal is slower than a predetermined speed and additionally receive the broadcasting signal from at least one other broadcast tuner based on the broadcast tuner list. The processor 120 may receive the broadcast tuner list from the server periodically or according to a predetermined event.

Each of the above-described elements of the electronic device according to various embodiments of the present disclosure may include one or more components, and the name of a corresponding element may vary according to the type of electronic device. The electronic device according to various embodiments of the present disclosure may include at least one of the above-described elements and may exclude some of the elements or further include other additional elements. Further, some of the elements of the electronic device according to various embodiments of the present disclosure may be coupled to form a single entity while performing the same functions as those of the corresponding elements before the coupling.

According to various embodiments of the present disclosure, at least some of the devices or methods according to various embodiment of the present disclosure as defined by the appended claims and/or disclosed herein may be implemented in the form of hardware, software, firm ware, or any combination (e.g., module or unit) of at least two of hardware, software, and firmware. The "module" may be interchangeably used with, for example, the term "unit", "logic", "logical block", "component", or "circuit". The "module" may be a minimum unit of an integrated component element or a part thereof.

The "module" may be the smallest unit that performs one or more functions or a part thereof. The "module" may be mechanically or electronically implemented. For example, the "module" according to the present disclosure may include at least one of an Application-Specific Integrated Circuit (ASIC) chip, a Field-Programmable Gate Arrays (FPGA), and a programmable-logic device for performing operations, which may be known or is to be developed.

If implemented in software, a computer-readable storage medium (or storage medium readable by a computer) storing at least one program (or programming module) may be provided. The software may, for example, be implemented by instructions stored in a computer-readable storage medium in the form of a programming module. The at least one program may include instructions that cause the electronic device to perform the methods according to various embodiments of the present disclosure as defined by the appended claims and/or disclosed herein. When the command is executed by one or more processors (for example, the processor 120), the one or more processors may execute a function corresponding to the command.

The computer-readable storage medium may, for example, be the memory 230. At least a part of the programming module may, for example, be implemented (e.g., executed) by the processor 220. At least a part of the programming module may, for example, include a module, a program, a routine, a set of instructions, or a process for performing at least one function.

The computer-readable storage medium may include magnetic media such as a hard disc, a floppy disc, and a magnetic tape; optical media such as a compact disc read only memory (CD-ROM) and a digital versatile disc (DVD); magneto-optical media such as a floptical disk; a hardware device specifically configured to store and execute program instructions (e.g., programming module), such as a read only memory (ROM), a random access memory (RAM), and a flash memory; an electrically erasable programmable read only memory (EEPROM); a magnetic disc storage device; any other type of optical storage device; and a magnetic cassette.

Alternatively, any combination of some or all of the may form a memory in which the program is stored. Further, a plurality of such memories may be included in the electronic device. In addition, the program instructions may include high class language codes, which can be executed in a computer by using an interpreter, as well as machine codes made by a compiler.

According to various embodiments, the electronic device 101 may include a computer-readable storage medium having a program stored therein to perform an operation for identifying a call inability state of the counterpart electronic device having received the call and an operation for transmitting the call wish message to the counterpart electronic device.

In addition, the program may be stored in an attachable storage device capable of accessing the electronic device through a communications network such as the Internet, an intranet, a local area network (LAN), a wide LAN (WLAN), a storage area network (SAN), or any combination thereof. Such a storage device may access the electronic device via an external port. Further, a separate storage device on the communications network may access a portable electronic device. Any of the hardware devices as described above may be configured to work as one or more software modules in order to perform the operations according to various embodiments of the present disclosure, and vice versa.

Any of the modules or programming modules according to various embodiments of the present disclosure may include at least one of the above-described elements, exclude some of the elements, or further include other additional elements. The operations performed by the modules, programming module, or other elements according to various embodiments of the present disclosure may be executed in a sequential, parallel, repetitive, or heuristic manner. Further, some operations may be executed according to another order or may be omitted, or other operations may be added.

FIGS. 1-10 are provided as an example only. At least some of the steps discussed with respect to these figures can be performed concurrently, performed in a different order, and/or altogether omitted. It will be understood that the provision of the examples described herein, as well as clauses phrased as "such as," "e.g.", "including", "in some aspects," "in some implementations," and the like should not be interpreted as limiting the claimed subject matter to the specific examples.

The above-described aspects of the present disclosure can be implemented in hardware, firmware or via the execution of software or computer code that can be stored in a recording medium such as a CD-ROM, a Digital Versatile Disc (DVD), a magnetic tape, a RAM, a floppy disk, a hard disk, or a magneto-optical disk or computer code downloaded over a network originally stored on a remote recording medium or a non-transitory machine-readable medium and to be stored on a local recording medium, so that the methods described herein can be rendered via such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein. Any of the functions and steps provided in the Figures may be implemented in hardware, software or a combination of both and may be performed in whole or in part within the programmed instructions of a computer. No claim element herein is to be construed under the provisions of 35 U.S.C. 112, sixth paragraph, unless the element is expressly recited using the phrase "means for".

While the present disclosure has been particularly shown and described with reference to the examples provided therein, it will be understood by those skilled in the art that various changes in form and details may be made therein without departing from the spirit and scope of the present disclosure as defined by the appended claims.

## Claims

1. An electronic device (101) comprising:
a communication interface (160); and
one or more processors (120) configured to:
transmit to a server (106), via the communication interface (160), a request for a broadcasting signal,
receive a broadcast tuner list from the server (106), and
receive the broadcasting signal from a first broadcast tuner identified in the broadcast tuner list.

2. The electronic device (101) of claim 1, wherein the one or more processors (120) are further configured to insert in the request at least one of a broadcast identification, an indication of a position of the electronic device, and an identification of the electronic device.

3. The electronic device (101) of claim 1, wherein the one or more processors (120) are further configured to insert in the broadcast tuner list information corresponding to at least one broadcast tuner that is determined based on on a distance between the at least one broadcast tuner and the electronic device and communication state information associated with the broadcast tuner.

4. The electronic device of claim 1, wherein the first broadcast tuner is selected as a source of the broadcasting signal based on a priority associated with the first broadcast tuner that is identified in the broadcast tuner list.

5. The electronic device of claim 1, wherein the one or more processor are further configured to control to the first broadcast tuner to receives the broadcasting signal by a request from the server or the electronic device and transmits the received broadcasting signal to the electronic device.

6. The electronic device of claim 1, wherein the first broadcast tuner includes two or more broadcast transmission channels and transmits the particular broadcasting signal through at least one of the broadcast transmission channels.

7. The electronic device (101) of claim 1, wherein the broadcasting signal is provided to the first broadcast tuner by at least one of a broadcasting station, a broadcast relay device, and a second broadcast tuner.

8. The electronic device (101) of claim 1, wherein the one or more processors (120) are further configured to additionally receive the broadcasting signal from a second broadcast tuner that is selected from the broadcast tuner list when the first broadcast tuner is unable to provide a predetermined quality of service.

9. A method comprising:
transmitting, from an electronic device (101) to a server (106), a request for a broadcasting signal;
receiving a broadcast tuner list from the server (106); and
receiving the broadcasting signal from a first broadcast tuner identified in the broadcast tuner list.

10. The method of claim 9, wherein the request for the broadcasting signal includes at least one of a broadcast identification, an indication of a position of the electronic device (101), and an identification of the electronic device (101).

11. The method of claim 9, urther comprising inserting in the broadcast tuner list information corresponding to at least one broadcast tuner that is determined based on on a distance between the at least one broadcast tuner and the electronic device (101) and communication state information associated with the broadcast tuner.

12. The method of claim 9, wherein the first broadcast tuner is selected as a source of the broadcasting signal based on a priority associated with the first broadcast tuner that is identified in the broadcast tuner list.

13. The operation method of claim 9, wherein the first broadcast tuner includes two or more broadcast transmission channels and transmits the particular broadcasting signal through at least one of the broadcast transmission channels.

14. The method of claim 9, further comprising additionally receiving the broadcasting signal from a second broadcast tuner that is selected from the broadcast tuner list when the first broadcast tuner is unable to provide a predetermined quality of service.

15. A non-transitory computer-readable medium storing one or more processor-executable instructions, which when executed by one or more processors (120) cause the one or more processors to execute a method comprising the steps of:
transmitting to a server (106) a request for a broadcasting signal;
receiving a broadcast tuner list from the server (106); and
receiving the broadcasting signal from a first broadcast tuner identified in the broadcast tuner list.
